# EUROPEAN PATENT SPECIFICATION

(11) **EP 1 123 981 B1**
(45) Date of publication and mention of the grant of the patent: **11.02.2004**
(21) Application number: 99931475.0
(22) Date of filing: 22.07.1999
(51) Int. Cl.: C14C 9/00, C14C 11/00, C08G 18/62, C09D 175/04

(54) **LEATHER COATED WITH FLUORORESIN**
LEDER BESCHICHTET MIT FLUORHARZ
CUIR ENDUIT DE FLUORORESINE

(30) Priority: 10.08.1998 JP 22612998
(43) Date of publication of application: 16.08.2001
(73) Proprietor: Daikin Industries, Ltd., Osaka-shi, Osaka 530-8323 (JP)
(72) Inventor: MAEDA, Masahiko, Yodogawa-seisakusho, Settsu-shi, Osaka 566-8585 (JP); UEDA, Akihiko, Yodogawa-seisakusho, Settsu-shi, Osaka 566-8585 (JP)
(74) Representative: HOFFMANN - EITLE
(86) International application number: PCT/JP1999/003914
(87) International publication number: WO 2000/009762

(56) References cited:
- JP-A- 3 174 418
- JP-A- 3 218 349
- JP-A- 8 113 800
- JP-A- 48 023 901
- US-A- 4 190 687
- US-A- 4 302 366
- PATENT ABSTRACTS OF JAPAN vol. 1998, no. 09, 31 July 1998 (1998-07-31) & JP 10 110200 A (KOBAYASHI PHARMACEUT CO LTD), 28 April 1998 (1998-04-28)
- DATABASE WPI Section Ch, Week 199514 Derwent Publications Ltd., London, GB; Class A25, AN 1995-102116 XP002176695 & JP 07 026204 A (NIPPON POLYURETHANE KOGYO KK), 27 January 1995 (1995-01-27)

## Description

The present invention relates to a leather coated with a fluorine-containing resin being excellent in stain-proofing property (stain-removability) and solvent resistance, a production method thereof and a leather product produced by using the coated leather.

There are various methods of finishing a surface of a leather depending on kind of a raw leather and application of leather products. Except un-finished leathers such as fur, suede and nubuck, a resin coating film is formed on a surface of a leather for finishing. The resin coating film is formed for protection of a leather surface and for a good appearance thereof and in addition, for preventing a stain from soaking into a leather and for easily wiping off sweat and stain.

As a material for coating on a surface of a leather, non-fluorine-containing materials such as urethane resins, nitrocellulose lacquer, proteins such as casein, and higher fatty acid ester wax are used. Among them, urethane resins are excellent in adhesion, flexibility, transparency, bending resistance, cold resistance, chemical resistance, heat resistance and abrasion resistance and are widely used.

However conventional coating films are hydrophilic or hydrophobic. In case of the former hydrophilic film, aqueous stains such as mud and soy sauce easily adheres thereto, and in case of the latter hydrophobic film, oily stains such as sebaceous matter, rouge and ink of ball-point pen easily adheres. Those stains are difficult to be removed by wiping, etc. For the same reason, solvent resistance is also not sufficient.

On the other hand, while a fluorine-containing resin coating film is excellent in water- and oil-repellency and solvent resistance, it is inferior generally in flexibility and poor in adhesion to a leather surface or a primer coating film. Therefore it has been considered that the fluorine-containing resin coating film is not practical as a coating film for a leather which is demanded to have a high flexibility.

An object of the present invention is to provide a leather material and leather product having improved stain-proofing property, (stain removability) and solvent resistance while making the best use of feeling of the leather product and maintaining required properties, for example, flexibility, cold resistance and bending resistance.

The inventors of the present invention have made studies with respect to the fluorine-containing resin coating film which has been considered impractical and as a result of trial and error, have found that when the fluorine-containing resin coating film having a reactive curable group is used, the above-mentioned objects are attained and stain-proofing property and solvent resistance which have not been obtained before can be imparted to a leather.

### DISCLOSURE OF INVENTION

Namely the present invention relates to a leather coated with a cured fluorine-containing resin coating composition, which cured composition achieves a grey scale of grade 4 or more in a stain removing test performed according to JIS L 0805 and an area of chipped-off fluorine-containing coating film being 50% or less in an ethanol resistance test performed according to JIS K 6547 by using a clock meter type friction tester,
the cured coating composition being obtainable by curing a curable fluorine-containing resin coating composition comprising a fluorine-containing resin having a reactive curable group and a curing agent.

In the preferred leather of the present invention, cracking does not arise on the fluorine-containing coating film in a cold resistance test in which the coated leather is allowed to stand at -5°C for 24 hours and then folded with a coated surface being faced outward, and also cracking does not arise on the fluorine-containing coating film when the coated leather is folded 30,000 times by using a flexometer described in JIS K 6545.

It is preferable that a weight of the fluorine-containing resin coating film is not less than 2 g/m².

Each test used herein is carried out by the following methods and the results thereof are evaluated as follows.

### (1) Stain removing test

A coating composition to be tested is coated in a specified amount on a white cowhide (having a urethane resin coating film of 10 g/m² as a primer layer) by using a spray gun (a small size spray gun W-88 available from ANEST IWATA CORPORATION) and cured at 50°C for two minutes to give a coated leather. To the coated leather is applied staining substances mentioned hereinafter, followed by allowing to stand for 30 minutes. Then the stain adhered on the coated leather is wiped softly five times with a cotton cloth impregnated with a commercially available stain removing agent mentioned hereinafter. A floating stain is wiped off sufficiently with a cotton cloth which is not impregnated with a stain removing agent. Then a state of stain remaining on the leather surface is compared (with naked eyes) to a grey scale for staining of JIS L 0805.

The grey scale for staining of JIS L 0805 is classified into nine grades, namely from grade "1" of the most stained degree through "1-2", "2", "2-3", "3", "3-4", "4", "4-5" up to "5" of the most stainless degree for evaluation of staining degree.

### Staining substance

### Kind of stain

Rouge: "CALIFORNIA COLORS No. 4" available from NIHON KOLMAR CO., LTD.
Mustard: Mustard for hot dog available from Q.P. CORPORATION
Ball-point pen: Oil ink ball-point pen (black) SOFT STAINLESS SA-S available from MITSUBISHI PENCIL CO., LTD.

### Stain removing agent

Detergent: Diluted aqueous solution of 30 % by weight of neutral synthetic detergent "MAMA ROYAL NATUR" available from LION CORPORATION
Cleaner for leather: "MERCI CLEANER" available from SANETCHI K.K.

### (2) Ethanol resistance test

A coating composition to be tested is coated in a specified amount on a dark blue cowhide (having a urethane resin coating film of 20 g/m² as a primer layer) by using a spray gun (the same one as used in the stain removing test) and cured at 50°C for two minutes to give a coated leather. Some drops of an aqueous solution of 75 % by weight of ethanol are put on a surface of the coated leather, and after allowing to stand for three minutes, are soaked up with a paper. Immediately after that, the leather surface where the droplets of ethanol has been put is rubbed with a dry white cotton cloth five times by using a clock meter type friction tester described in JIS K 6547, and an area percentage of coating film chipped off is evaluated with naked eyes.

### (3) Cold resistance test

A coated white cowhide produced in the same manner as in the above-mentioned stain removing test is kept in a refrigerator of -5°C for 24 hours. Immediately after taken out, the coated leather is folded with the coated surface being faced outward. In the folded state, a red aqueous ink is applied to the folded part and immediately wiped off softly and unfolded. Cracking on the coating film is evaluated with naked eyes (if there is a cracking, it appears by a red line).

### (4) Flexing fatigue resistance test

After a coated white cowhide produced in the same manner as in the above-mentioned stain removing test is bent 30,000 times by using a flexometer described in JIS K 6545, a red aqueous ink is applied to the bent part and immediately wiped off. Then cracking on the coating film is evaluated with naked eyes (if there is a cracking, it appears by a red line).

The leather coated with a fluorine-containing resin of the present invention can be produced by applying a curable fluorine-containing resin coating composition comprising a fluorine-containing resin having a reactive curable group and a curing agent to a leather directly or through a primer layer and then curing a coating film.

Example of the preferred reactive curable group of the fluorine-containing resin having the curable reactive group (hereinafter referred to as "curable fluorine-containing resin") is at least one of hydroxyl group, amino group, epoxy group, carboxyl group, mrcapto group, hydrolyzable silyl group, amido bond, urethane bond and urea bond. Particularly preferred is hydroxyl group. It is preferable that a hydroxyl value of a fluorine-containing resin having hydroxyl group is not more than 200 mgKOH/g.

Preferable examples of a trunk chain of the curable fluorine-containing resin are polymers having at least one of a recurring unit of chlorotrifluoroethylene unit, tetrafluoroethylene unit, trifluoroethylene unit, hexafluoropropylene unit, vinylidene fluoride unit and vinyl fluoride unit.

Examples of the curing agent to be used are an isocyanate compound, amino resin, acid anhydrides, polysilane compounds, polyepoxy compounds and silane compounds having isocyanate group.

As mentioned above, the fluorine-containing resin coating film may be formed on a leather surface directly or through a primer layer. When the coating film is formed through a primer layer, it is preferable to use, as a material for the primer layer, an acrylic resin, methacrylic resin, urethane resin, acrylonitrile resin, butadiene resin, styrene resin, vinyl chloride resin, vinylidene chloride resin, vinyl acetate resin or a mixture of two or more thereof.

Further the present invention relates to various leather products having the above-mentioned leather coated with a fluorine-containing resin, for example, interior goods for vehicle and building, furniture, shoes, bags, clothes or small leather articles.

### BEST MODE FOR CARRYING OUT THE INVENTION

The fluorine-containing resin coating film formed as the outermost layer of the leather coated with the fluorine-containing resin coating composition of the present invention can be obtained by applying the curable fluorine-containing resin coating composition comprising a curable fluorine-containing resin having a reactive curable group and a curing agent to a leather and then curing it.

Examples of the reactive curable group of the curable fluorine-containing resin are, as mentioned above, hydroxyl group, amino group, epoxy group, carboxyl group, mrcapto group, hydrolyzable silyl group (for example, trimethoxysilyl group, triethoxysilyl group, etc.) amido bond, urethane bond and urea bond. Particularly hydroxyl group is preferred from the viewpoint of stability of the resin and curing reactivity. It is preferable from the viewpoint of feeling of a coated leather and flexing resistance that hydroxyl group is introduced so that a hydroxyl value is not more than 200 mgKOH/g.

For example, concretely there are curable fluorine-containing resins described in JP-B-60-21686, JP-A-3-121107, JP-A-4-279612, JP-A-4-28707 and JP-A-2-232221. With respect to a molecular weight, it is preferable from the viewpoint of curability and workability at coating work that a number average molecular weight (measured with GPC) is from 1,000 to 500,000, particularly 1,500 to 100,000.

The curable fluorine-containing resins are those containing chlorotrifluoroethylene (CTFE) unit, tetrafluoroethylene (TFE) unit, trifluoroethylene (TrFE) unit, hexafluoropropylene (HFP) unit, vinylidene fluoride (VDF) unit or vinyl fluoride (VF) unit preferably in an amount of not less than 20 % by mole. Particularly curable fluorine-containing resins containing in an amount of 20 to 60 % by mole are preferred from the viewpoint of stain-proofing property and solubility in a solvent.

Examples of the usable curable fluorine-containing resin commercially available are, for instance, organic solvent type fluorine-containing resin coating compositions such as ZEFFLE GK (trade name) series available from DAIKIN INDUSTRIES, LTD., LUMIFLON (trade name) series available from ASAHI GLASS CO., LTD., CEFRAL COAT (trade name) available from CENTRAL GLASS CO., LTD., FLUONATE (trade name) series available from DAINIPPON INK AND CHEMICALS, LTD., and ZAFLON (trade name) series available from TOAGOSEI CO., LTD.

The curable fluorine-containing resin may be blended with other resins, for example, one or two or more of a styrene resin, (meth)acrylic resin, polyester resin, alkyd resin, melamine/formaldehyde resin, polyisocyanate resin, epoxy resin, vinyl chloride resin (for example, vinyl chloride/vinyl acetate copolymer, etc.), ketone resin, petroleum resin, chlorinated polyolefins such as chlorinated polyethylene and chlorinated polypropylene, inorganic resins such as silica gel and silicate, fluorine-containing resins other than the above-mentioned curable fluorine-containing resins of the present invention (for example, homopolymers of tetrafluoroethylene and chlorotrifluoroethylene and copolymers thereof with other monomer). The other resins are not limited to them.

The curing agent which is used in the present invention as an another component of the curable fluorine-containing resin coating composition may be one which reacts with the above-mentioned reactive curable group for curing of the fluorine-containing resin. For example, isocyanate compounds, amino resins, acid anhydrides, polysilane compounds, polyepoxy compounds, isocyanate group-containing silane compounds, and the like are used usually.

Non-restricted examples of the isocyanate compound are, for instance, 2,4-tolylene diisocyanate, diphenylmethane-4,4'-diisocyanate, xylylene diisocyanate, isophorone diisocyanate, lysine methyl ester diisocyanate, methylcyclohexyl diisocyanate, trimethylhexamethylene diisocyanate, hexamethylene diisocyanate, n-pentane-1,4-diisocyanate, termonomers thereof, adducts and biurets thereof, polymers thereof having two or more isocyanate groups and blocked isocyanates.

Non-restricted examples of the above-mentioned amino resin are, for instance, urea resin, melamine resin, benzoguanamine resin, glycoluryl resin, methylolated melamine resin obtained by methylolating melamine, alkyl-etherified melamine resins obtained by etherifying methylolated melamine with alcohol such as methanol, ethanol and butanol, and the like.

Non-restricted examples of the acid anhydride are, for instance, phthalic anhydride, pyromellitic anhydride, mellitic anhydride, and the like.

The polysilane compound is a compound having two or more groups selected from SiOH group and hydrolyzable group directly bonded to silicon atom or a condensate thereof, and the compounds described, for example, in JP-A-2-232250 and JP-A-2-232251 can be used. Examples thereof are dimethyldimethoxysilane, dibutyldimethoxysilane, diisopropyldipropoxysilane, diphenyldibutoxysilane, diphenylethoxysilane, diethyldisilanol, dihexyldisilanolmethyltrimethoxysilane, methyltriethoxysilane, ethyltriethoxysilane, propyltrimethoxysilane, phenyltriethoxysilane, phenyltributoxysilane, hexyltriacetoxysilane, methyltrisilanol, phenyltrisilanol, tetramethoxysilane, tetraethoxysilane, tetrapropoxysilane, tetraacetoxysilane, diisopropoxydivaleroxysilane and tetrasilanol.

Examples of the usable polyepoxy compound and isocyanate group-containing silane compound are, for instance, those described in JP-A-2-232250 and JP-A-2-232251. Examples of the suitable compounds are

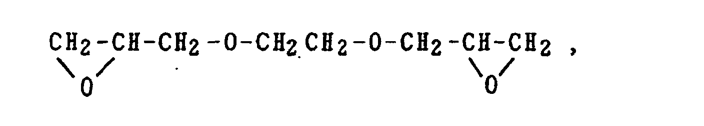

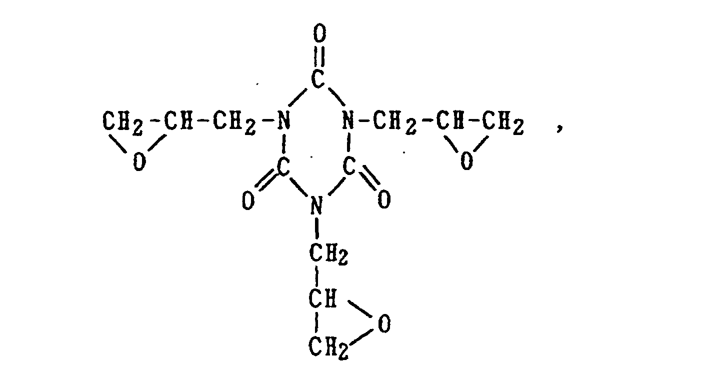

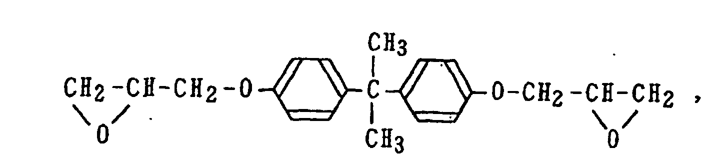

OCNC₃H₆Si(OC₂H₅)₃,

OCNC₂H₄Si(OCH₃)₃,

and the like.

An adding amount of the curing agent is from 0.1 to 5 equivalents, preferably 0.5 to 1.5 equivalents to 1 equivalent of the reactive curable group in the above-mentioned curable fluorine-containing resin. The coating film can be cured usually at 0° to 200°C for about several seconds to about ten days.

To the coating composition to be used in the present invention can be added various additives. Examples of the additive are those usually used, such as a curing accelerator, pigment, pigment dispersing agent, dye, leveling agent, defoaming agent, gellation preventing agent, ultraviolet ray absorber, anti-oxidant, plasticizer and thickener.

Examples of the curing accelerator are, for instance, organotin compounds, alkyl acid phosphates, reaction products of amine with alkyl acid phosphates, saturated or unsaturated polyvalent carboxylic acids or acid anhydrides thereof, organotitanate compounds, amine compounds, lead octylate, and the like.

The curing accelerators may be used solely or in a mixture of two or more thereof.

An adding amount of the curing accelerator is preferably from 1.0 x 10⁻⁶ parts by weight to 1.0 x 10⁻² parts by weight, further preferably from 5.0 x 10⁻⁵ parts by weight to 1.0 x 10⁻³ parts by weight on the basis of 100 parts by weight of fluorine-containing resin.

Non-restricted examples of the pigment are, for instance, an inorganic pigment such as titanium oxide, calcium carbonate or carbon black; an organic pigment such as phthalocyanine, quinacridone or azo pigment. An adding amount of the pigment is usually up to about 200 % by weight based on the fluorine-containing resin.

In the present invention, the coating composition can be prepared in the form of organic solvent composition, water dispersible composition and non-water-dispersible dispersion. From the viewpoint of storage stability of dye and curing reactivity, organic solvent composition is preferred.

In case of the organic solvent composition, examples of the solvent are esters such as ethyl acetate, butyl acetate, isopropyl acetate, isobutyl acetate, cellosolve acetate and propylene glycol methyl ether acetate; ketones such as acetone, methyl ethyl ketone, methyl isobutyl ketone and cyclohexane; cyclic ethers such as tetrahydrofuran and dioxane; amides such as N,N-dimethylformamide and N,N-dimethylacetamide; aromatic hydrocarbons such as toluene and xylene; alcohols such as propylene glycol methyl ether; hydrocarbons such as hexane and heptane; solvent mixture thereof . A resin concentration is from 1 to 95 % by weight, preferably 5 to 70 % by weight.

The leather coated with the fluorine-containing resin coating composition of the present invention can be obtained by applying the above-mentioned curable fluorine-containing resin coating composition to the leather directly or through a primer layer and then carrying out curing.

For the primer layer, conventional primer resins can be used. For example, the primer layer is formed by applying a coating composition comprising an acrylic resin, methacrylic resin, urethane resin, acrylonitrile resin, butadiene resin, styrene resin, vinyl chloride resin, vinylidene chloride resin, vinyl acetate resin or a mixture of two or more thereof. By forming the primer layer, smoothness and uniformity of appearance can be enhanced. Particularly preferred primer are urethane resin and acrylic resin. A coating amount of the primer layer may be selected optionally in a range of from 1 to 100 g/m² depending on application, kind of raw leather and surface condition of the leather.

A coating amount (solid content) of the cured fluorine-containing coating film which is formed as the outermost layer of the coated leather of the present invention may be optionally selected in a range of not less than 2 g/m².

A coating method is not limited particularly as far as the above-mentioned coating thickness can be obtained. For example, spray coating, brush coating, curtain coating, roll coating, and the like method can be employed.

A curing method of a coating film differs depending on kinds of a curing agent and curing accelerator, a coating amount, application of the coated leather, etc. For example, there are (1) a method of allowing to stand at room temperature for five days, (2) a method of allowing to stand at 50°C for two minutes in a hot air drying oven, (3) a method of heating for 10 seconds with an infrared heater, and the like method.

Kind of a leather to be coated is not limited depending on kind of animal, a processing method or application, and various kinds of leathers can be used. For example, there are leathers of animals such as cow, sheep, goat, pig, horse, kangaroo and deer. Examples of the surface finishing of the leather are full grain leather, corrected grain leather, pasted leather, embossing leather, shrink leather and patent leather.

The cured fluorine-containing coating film of the present invention is excellent in transparency, and when coating directly or through a transparent primer layer, it is possible to make the best use of a surface pattern of the leather. Also when a primer layer is colored by adding a pigment to the primer or when a pigment is added to the curable fluorine-containing resin coating composition for coloring, a tone of color of the pigment can be made vivid. Thus the leather of the present invention coated with the fluorine-containing resin coating composition is excellent in not only stain-proofing property, solvent resistance, cold resistance and flexing fatigue resistance but also a property for keeping a surface pattern.

Accordingly the leather of the present invention coated with the fluorine-containing resin coating composition can be processed into various leather products.

Examples thereof are, for instance, interior of building; interior of vehicles such as seat, head rest, arm rest, steering wheel, inner lining of door and lining of ceiling of automobile, seat and inner lining of aircraft, seat of train and seat of marine vessel; leather-covered furniture such as sofa, chair for living room and chair and table for dining room; shoes made of leather such as boots, pumps, men's shoes, sports shoes and safety shoes; leather bags such as knapsack, handbag, shoulder-strap bag, pouch, traveling bag and rucksack; leather wears such as skirt, overcoat, pants, jacket, motorcyclist's suits, ski suits, gloves and hat; small leather articles such as purse, belt, watch band, pocket notebook, harness and book cover; fabrics for handicraft; and the like. The leather product may be produced by cutting and sewing the coated leather of the present invention or forming into a leather product and then coating.

Then the leather of the present invention coated with the fluorine-containing coating composition is explained by means of examples, but the present invention is not limited to them. "Part" and "%" represent "part by weight" and "% by weight", respectively.

### EXAMPLE 1

A commercially available urethane resin coating for primer of a leather was coated on a white cowhide (chrome-tanned steer hide grain leather) with a spray gun to form a primer layer having a coating amount of 10 g/m². Separately a curable fluorine-containing resin coating composition was prepared by adding 11 parts of CORONATE HX (hexamethylene diisocyanate curing agent available from NIPPON POLYURETHANE INDUSTRY CO., LTD.) to 100 parts of ZEFFLE GK500 (TFE resin coating composition having hydroxyl group as a reactive curable group and being available from DAIKIN INDUSTRIES, LTD., Hydroxyl value of solid content of resin: 60 mgKOH/g, Acid value: 0 mgKOH/g) (NCO/OH=1) and then dispersing the mixture in 400 parts of butyl acetate.

The obtained coating composition was coated on the primer layer of white cowhide with a spray gun and cured at 50°C for two minutes to give the leathers of the present invention coated with the fluorine-containing resin coating composition which have an outermost layer of a fluorine-containing resin coating film of 2 g/m² and 10 g/m² (solid content), respectively.

With respect to the obtained white leathers coated with the fluorine-containing resin coating composition, the above-mentioned stain removing test, cold resistance test and flexing fatigue resistance test were carried out. The results are shown in Table 1.

Further the leathers of the present invention coated with the fluorine-containing resin coating composition were obtained in the same manner as in the above-mentioned white cowhide except that a dark blue cowhide (chrome-tanned steer hide grain leather having 10 g/m² of urethane resin coating film as a primer layer) was used.

The above-mentioned ethanol resistance test was carried out by using the dark blue leathers coated with the fluorine-containing resin coating composition. The results are shown in Table 1.

### EXAMPLES 2 to 13

White leathers coated with a fluorine-containing resin coating composition and dark blue leathers coated with a fluorine-containing resin coating composition were produced in the same manner as in Example 1 except that a curable fluorine-containing resin and a curing agent were changed to resins shown in Table 2 and mixed in a ratio of NCO/OH=1. A stain removing test, cold resistance test, flexing fatigue resistance test and ethanol resistance test were carried out. The results are shown in Table 2.

The resins used were as follows
ZEFFLE GK-510: TFE resin coating composition having hydroxyl group available from DAIKIN INDUSTRIES, LTD., hydroxyl value of resin solid content: 60 mgKOH/g, acid value: 9 mgKOH/g
ZEFFLE GK-550: TFE resin coating composition having hydroxyl group available from DAIKIN INDUSTRIES, LTD., hydroxyl value of resin solid content: 95 mgKOH/g, acid value: 0 mgKOH/g
LUMIFLON LF-200: CTFE resin coating composition having hydroxyl group available from ASAHI GLASS CO., LTD., hydroxyl value of resin solid content: 53 mgKOH/g, acid value: 0 mgKOH/g
TAKENATE D-177N: Hexamethylene diisocyanate curing agent available from TAKEDA CHEMICAL INDUSTRIES, LTD.
CORONATE 2094: Hexamethylene diisocyanate curing agent available from NIPPON POLYURETHANE INDUSTRY CO., LTD.

### COMPARATIVE EXAMPLE 1

A white leather coated with a urethane resin coating composition and a dark blue leather coated with a urethane resin coating composition for comparison were produced in the same manner as in Example 1 except that a commercially available non-fluorine-containing urethane resin coating composition for finishing of a leather was used instead of the fluorine-containing resin coating composition. A stain removing test, cold resistance test, flexing fatigue resistance test and ethanol resistance test were carried out. The results are shown in Table 1.

### COMPARATIVE EXAMPLES 2 and 3

A white leather coated with a fluorine-containing resin coating composition and a dark blue leather coated with a fluorine-containing resin coating composition were produced in the same manner as in Example 1 except that a curable fluorine-containing resin, a curing agent, a mixing ratio thereof and coating amount were changed as shown in Table 2, and tests were carried out. The results are shown in Table 2.

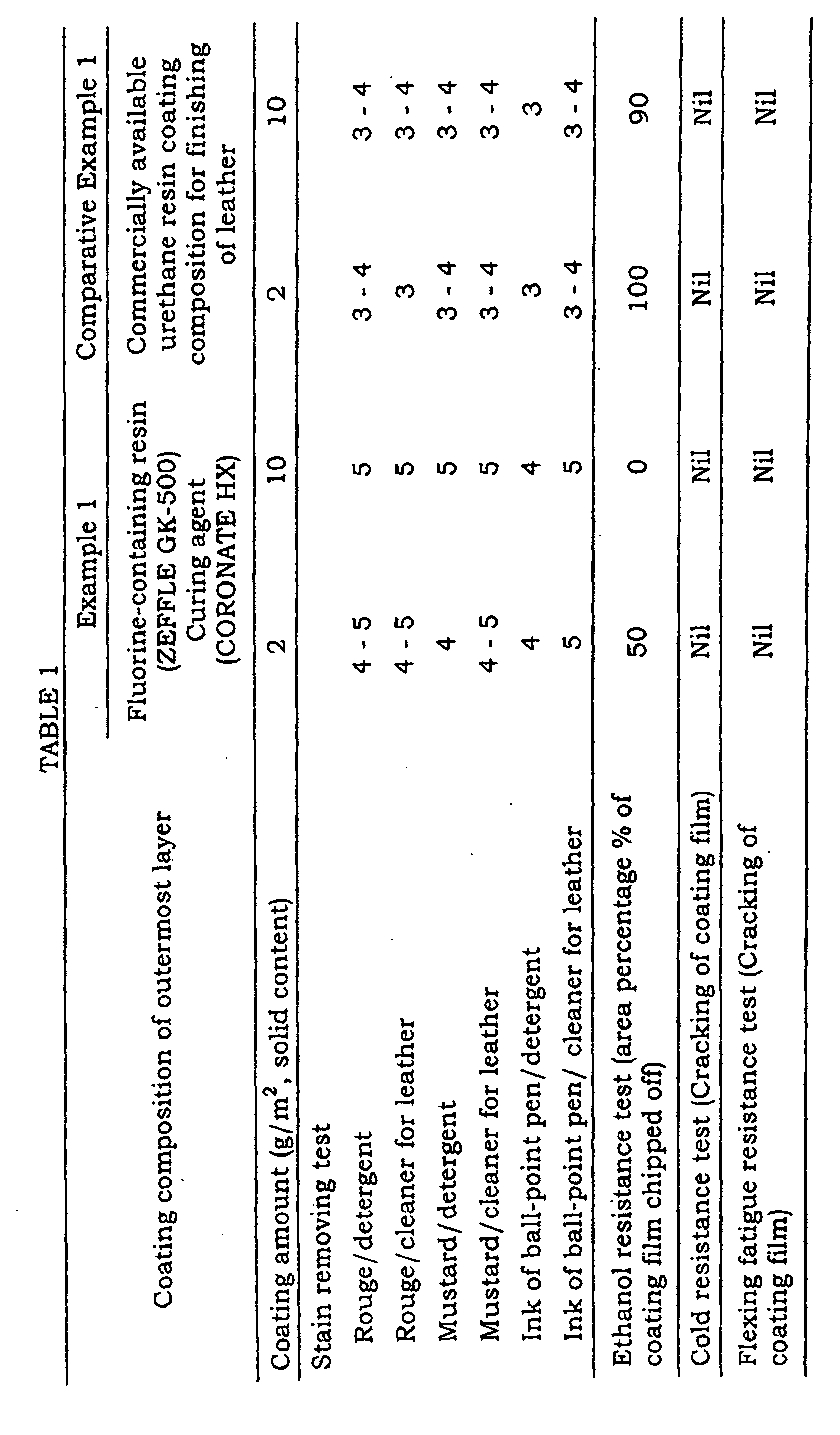

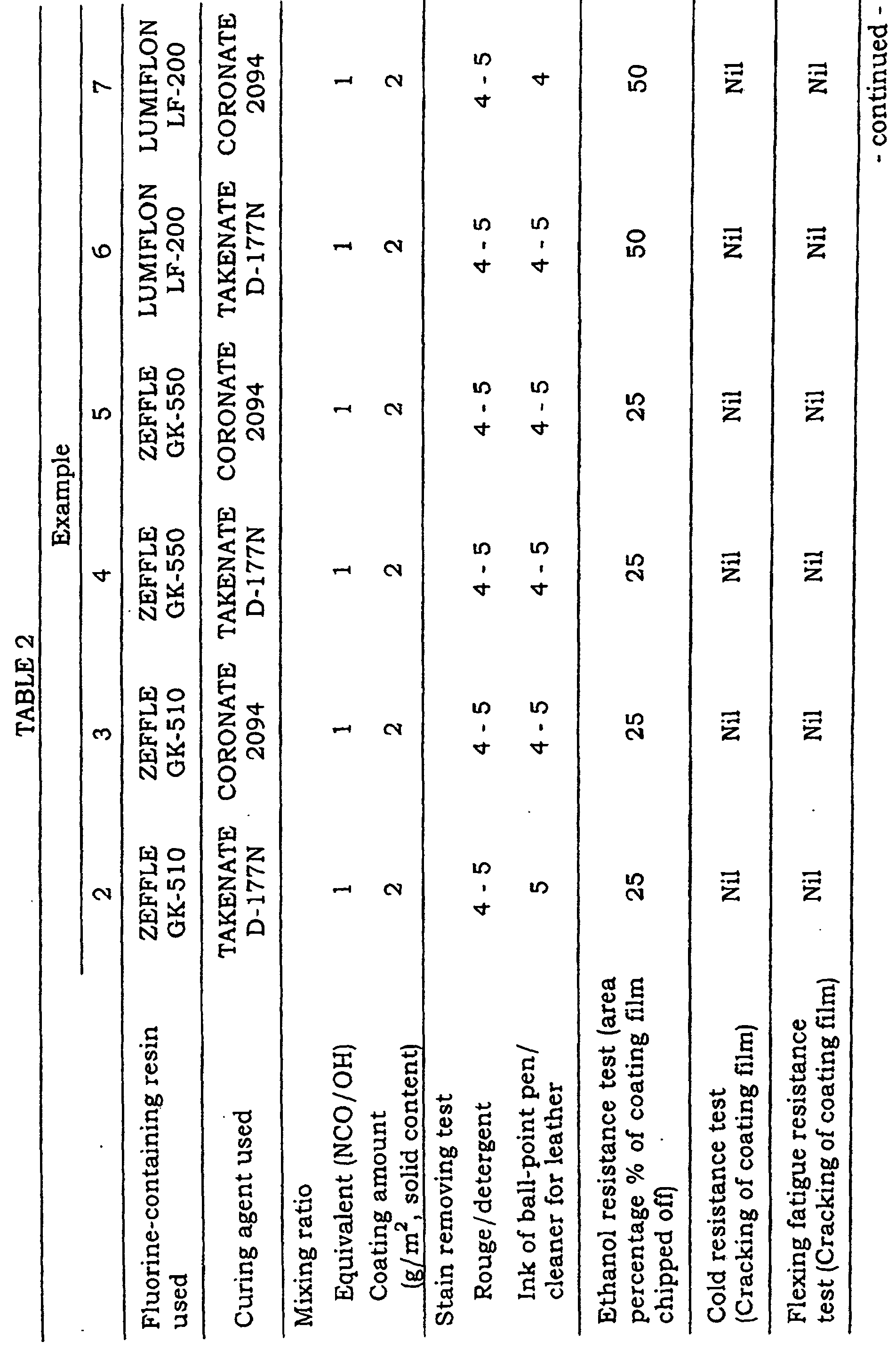

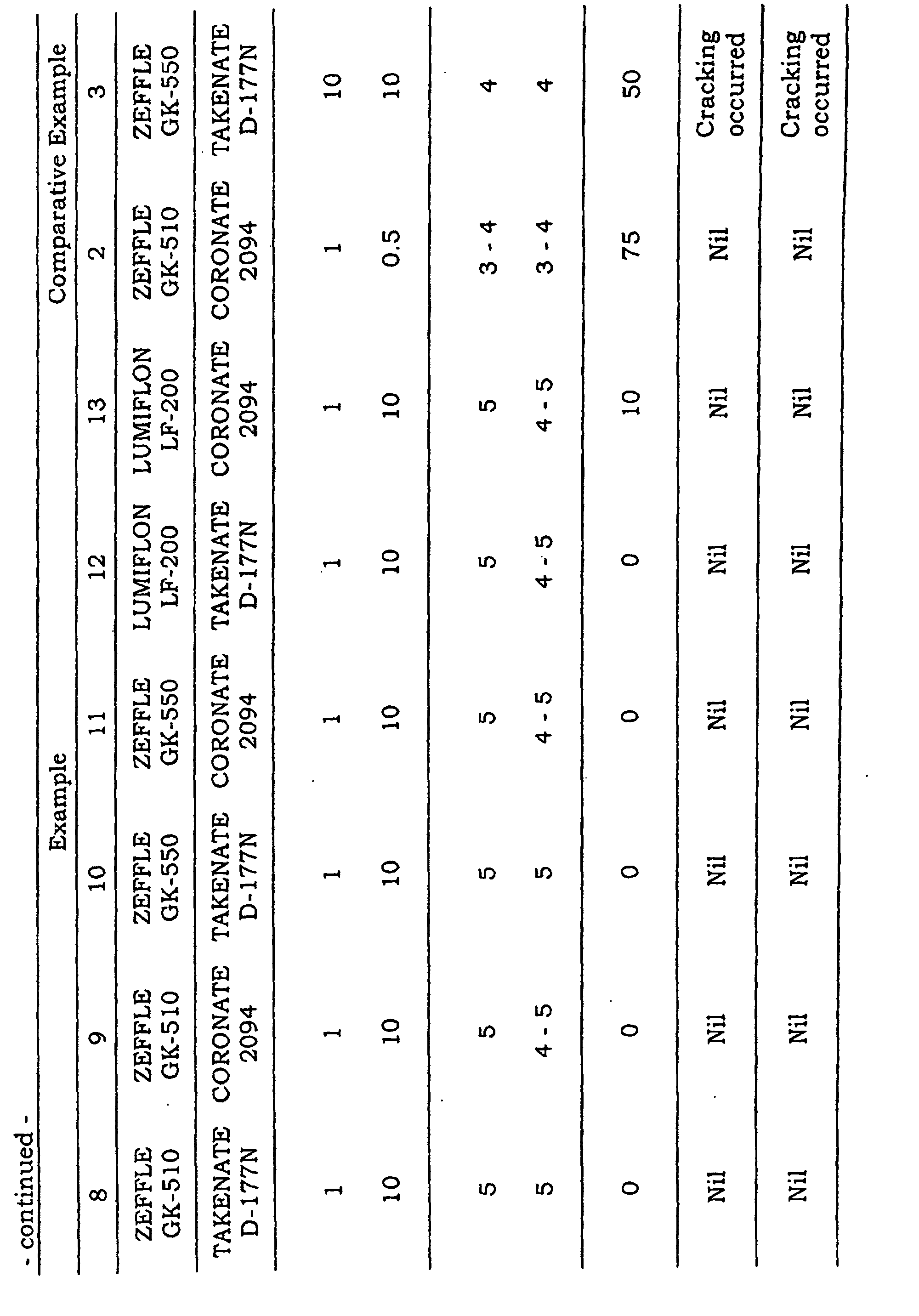

As it is clear from Tables 1 and 2, stain removability against various stains are enhanced with respect to the leather coated with the fluorine-containing resin coating composition of the present invention.

Also cold resistance and flexing fatigue resistance are maintained, and solvent resistance is improved.

### INDUSTRIAL APPLICABILITY

According to the present invention, by forming the outermost layer of the coated leather with a curable fluorine-containing resin, stain removability and solvent (ethanol) resistance are enhanced, and cold resistance and flexing fatigue resistance, lowering of which was cared by the use of fluorine-containing resin, can be maintained at a level of conventional urethane resin coating.

## Claims

1. A leather coated with a cured fluorine-containing resin coating composition, which cured composition achieves a grey scale of grade 4 or more in a stain removing test performed according to JIS L 0805 and an area of chipped-off fluorine-containing coating film being 50% or less in an ethanol resistance test performed according to JIS K 6547 by using a clock meter type friction tester,
the cured coating composition being obtainable by curing a curable fluorine-containing resin coating composition comprising a fluorine-containing resin having a reactive curable group and a curing agent.

2. A leather coated with a fluorine-containing resin coating according to Claim 1, wherein in the stain removing test, a stain is marked with a rouge, the stain being allowed to stand for 30 minutes and a neutral detergent being used as a stain-removing agent.

3. A leather coated with a fluorine-containing resin coating according to Claim 1, wherein cracking does not arise on the fluorine-containing resin coating film in a cold resistance test in which the leather is allowed to stand at -5°C for 24 hours and is folded with its coated surface being faced outward.

4. A leather coated with a fluorine-containing resin coating according to any of Claims 1 to 3, wherein cracking does not arise on the fluorine-containing resin coating film in a flexing fatigue resistance test which is carried out by bending the coated leather 30,000 times by using a flexometer described in JIS K 6545.

5. A leather coated with a fluorine-containing resin coating according to any of Claims 1 to 4, which has a fluorine-containing resin coating film thickness of 2 g/m².

6. A leather coated with a fluorine-containing resin coating composition according to any preceding Claim, wherein the reactive curable group is a hydroxyl group, an amino group, an epoxy group, a carboxyl group, a mercapto group, a hydrolysable silyl group, an amido bond, a urethane bond or a urea bond.

7. A leather coated with a fluorine-containing resin coating composition according to Claim 6, wherein the reactive curable group is a hydroxyl group.

8. A leather coated with a fluorine-containing resin coating according to Claim 7, wherein the hydroxyl value of the fluorine-containing resin having a hydroxyl group is not more than 200 mgKOH/g.

9. A leather coated with a fluorine-containing resin coating according to any preceding Claim, wherein the fluorine-containing resin is a polymer having a chlorotrifluoroethylene unit, a tetrafluoroethylene unit, a trifluoroethylene unit, a hexafluoropropylene unit, a vinylidene fluoride unit or a vinyl fluoride unit.

10. A leather coated with a fluorine-containing resin coating according to any preceding Claim, wherein the curing agent is an isocyanate compound, an amino resin, an acid anhydride, a polysilane compound, a polyepoxy compound or a silane compound having an isocyanate group.

11. A leather coated with a fluorine-containing resin coating according to any preceding Claim, wherein the fluorine-containing resin coating film is formed directly on the leather.

12. A leather coated with a fluorine-containing resin coating according to any preceding Claim, wherein a primer layer is formed between the leather and the fluorine-containing resin coating film.

13. A leather coated with a fluorine-containing resin coating according to Claim 12, wherein the primer layer is a non-fluorine-containing coating film comprising an acrylic resin, a methacrylic resin, a urethane resin, an acrylonitrile resin, a butadiene resin, a styrene resin, a vinyl chloride resin, a vinylidene chloride resin, a vinyl acetate resin or a mixture of two or more thereof.

14. A method of producing a leather coated with a fluorine-containing resin coating as defined in any preceding Claim, comprising the steps of
(i) applying a curable fluorine-containing resin coating composition on a leather surface either directly or through a primer layer; and
(ii) curing the coating composition.

15. A method according to Claim 14, wherein the fluorine-containing resin coating composition is coated on the leather directly without forming a primer layer.

16. A method according to Claim 14, wherein the fluorine-containing resin coating composition is coated after coating the primer layer on the leather.

17. A method according to Claim 16, wherein the primer layer is the non-fluorine-containing coating film defined in Claim 13.

18. Use of a leather coated with a fluorine-containing resin coating as defined in any of Claims 1-13, for interior goods of a building, interior goods of a vehicle, furniture, shoes, bags, clothes and small leather articles.

## Patentansprüche

1. Mit einer gehärteten fluorhaltigen Harzbeschichtungszusammensetzung beschichtetes Leder,
wobei die gehärtete Zusammensetzung eine Grauskala mit einem Grad von 4 oder mehr in einem Fleckenentfernungstest erreicht, der gemäss JIS L 0805 durchgeführt wird, und der Bereich des abgekratzten fluorhaltigen Beschichtungsfilms in einem Ethanol-Widerstandstest, der gemäss JIS K 6547 unter Verwendung eines Friktionstestgeräts vom Uhrwerk-Typ durchgeführt wird, 50 % oder weniger ist
wobei die gehärtete Beschichtungszusammensetzung durch Härten einer härtbaren fluorhaltigen Harzbeschichtungszusammensetzung, die ein fluorhaltiges Harz mit einer reaktiven aushärtbaren Gruppe und ein Härtungsmittel umfasst, erhältlich ist.

2. Mit einer fluorhaltigen Harzbeschichtung beschichtetes Leder gemäss Anspruch 1, wobei in dem Fleckenentfernungstest ein Fleck rot markiert ist und es dem Fleck ermöglicht wird, für 30 Minuten anzudauern, und wobei ein neutrales Tensid als Fleckenentfernungsmittel verwendet wird.

3. Mit einer fluorhaltigen Harzbeschichtung beschichtetes Leder gemäss Anspruch 1, wobei es bei einem Kälteresistenztest, in dem das Leder für 24 Stunden bei -5°C gehalten und mit seiner beschichteten Oberfläche nach aussen zeigend gefaltet wird, nicht zum Zerreissen des fluorhaltigen Harzbeschichtungsfilms kommt.

4. Mit einer fluorhaltigen Harzbeschichtung beschichtetes Leder gemäss einem der Ansprüche 1 bis 3, wobei das Zerreissen des fluorhaltigen Harzbeschichtungsfilms bei einem Biegeermüdungswiderstandstest, der durch 30.000-faches Verbiegen des beschichteten Leders unter Verwendung eines Flexometers, das in JIS K 6545 beschrieben ist, durchgeführt wird, nicht auftritt.

5. Mit einer fluorhaltigen Harzbeschichtung beschichtetes Leder gemäss einem der Ansprüche 1 bis 4, welche eine Dicke des fluorhaltigen Harzbeschichtungsfilms von 2 g/m² hat.

6. Mit einer fluorhaltigen Harzbeschichtungszusammensetzung beschichtetes Leder gemäss einem der vorhergehenden Ansprüche, wobei die reaktive härtbare Gruppe eine Hydroxylgruppe, eine Aminogruppe, eine Epoxygruppe, eine Hydroxylgruppe, eine Mercaptogruppe, eine hydrolysierbare Silylgruppe, eine Amidbindung, eine Urethanbindung oder eine Harnstoffbindung ist.

7. Mit einer fluorhaltigen Harzbeschichtungszusammensetzung beschichtetes Leder gemäss Anspruch 6, wobei die reaktive härtbare Gruppe eine Hydroxylgruppe ist.

8. Mit einer fluorhaltigen Harzbeschichtung beschichtetes Leder gemäss Anspruch 7, wobei der Hydroxylwert des fluorhaltigen Harzes mit einer Hydroxylgruppe nicht mehr als 200 mg KOH/g ist.

9. Mit einer fluorhaltigen Harzbeschichtung beschichtetes Leder gemäss einem der vorhergehenden Ansprüche, wobei das fluorhaltige Harz ein Polymer mit einer Chlortrifluorethylen-Einheit, einer Tetrafluorethylen-Einheit, einer Trifluorethylen-Einheit, einer Hexafluorpropylen-Einheit, einer Vinylidenfluorid-Einheit oder einer Vinylfluorid-Einheit ist.

10. Mit einer fluorhaltigen Harzbeschichtung beschichtetes Leder gemäss einem der vorhergehenden Ansprüche, wobei das Härtungsmittel eine Isocyanatverbindung, ein Aminoharz, ein Säureanhydrid, eine Polysilanverbindung, eine Polyepoxyverbindung oder eine Silanverbindung mit einer Isocyanatgruppe ist.

11. Mit einer fluorhaltigen Harzbeschichtung beschichtetes Leder gemäss einem der vorhergehenden Ansprüche, wobei der fluorhaltige Harbeschichtungsfilm direkt auf dem Leder gebildet wird.

12. Mit einer fluorhaltigen Harzbeschichtung beschichtetes Leder gemäss einem der vorhergehenden Ansprüche, wobei eine Starterschicht zwischen dem Leder und dem fluorhaltigen Harzbeschichtungsfilm gebildet wird.

13. Mit einer fluorhaltigen Harzbeschichtung beschichtetes Leder gemäss Anspruch 12, wobei die Primärschicht ein nicht-fluorhaltiger Beschichtungsfilm ist, der ein Acrylharz, ein Methacrylharz, ein Urethanharz, ein Acrylnitrilharz, ein Butadienharz, ein Styrolharz, ein Vinylchloridharz, ein Vinylidenchloridharz, ein Vinylacetatharz oder ein Gemisch aus zwei oder mehreren davon umfasst.

14. Verfahren zur Herstellung eines mit einer fluorhaltigen Harzbeschichtung beschichteten Leders wie in einem der vorhergehenden Ansprüche definiert, umfassend die Schritte des
(i) Auftragens einer härtbaren fluorhaltigen Harzbeschichtungszusammensetzung auf einer Oberfläche, entweder direkt oder durch eine Primärschicht; und
(ii) Härten der Beschichtungszusammensetzung.

15. Verfahren gemäss Anspruch 14, wobei die fluorhaltige Harzbeschichtungszusammensetzung ohne Bildung einer Primärschicht direkt auf das Leder beschichtet wird.

16. Verfahren gemäss Anspruch 14, wobei die fluorhaltige Harzbeschichtungszusammensetzung nach dem Beschichten der Primärschicht auf das Leder beschichtet wird.

17. Verfahren gemäss Anspruch 16, wobei die Primärschicht der nicht-fluorhaltige Beschichtungsfilm ist, der in Anspruch 13 definiert wurde.

18. Verwendung eines Leders, das mit einer fluorhaltigen Harzbeschichtung, wie in einem der Ansprüche 1 bis 13 definiert, beschichtet ist, für Inneneinrichtungsgegenstände von Gebäuden, Inneneinrichtungsgegenstände von Transportmitteln, Möbel, Schuhe, Taschen, Kleidung und kleine Lederartikel.

## Revendications

1. Cuir enduit d'une composition de revêtement en résine contenant du fluor réticulée, laquelle composition réticulée parvient à atteindre une valeur supérieure ou égale à 4 sur l'échelle de gris au cours d'un test de détachage effectué selon la norme JIS L 0805 et une surface de film de revêtement contenant du fluor qui s'est écaillée qui est inférieure ou égale à 50 % au cours d'un test de résistance à l'éthanol effectué selon la norme JIS K 6547 en utilisant un appareil de test avec frottements de type appareil de mesure à cadrans,
la composition de revêtement réticulée pouvant être obtenue en réticulant une composition réticulable de revêtement en résine contenant du fluor comprenant une résine contenant du fluor ayant un groupe réactif réticulable et un agent de réticulation.

2. Cuir enduit d'un revêtement en résine contenant du fluor selon la revendication 1, dans lequel au cours du test de détachage, on imprime la tache avec un rouge, en laissant la tache reposer 30 minutes et un détergent neutre étant utilisé comme agent détachant.

3. Cuir enduit d'un revêtement en résine contenant du fluor selon la revendication 1, dans lequel un craquelage ne survient pas sur le film du revêtement en résine contenant du fluor au cours d'un test de résistance au froid dans lequel on laisse le cuir à -5°C pendant 24 heures et on le plie avec sa surface enduite tournée vers l'extérieur.

4. Cuir enduit d'un revêtement en résine contenant du fluor selon l'une quelconque des revendications 1 à 3, dans lequel un craquelage ne survient pas sur le film du revêtement en résine contenant du fluor au cours d'un test de résistance à la fatigue due aux flexions répétées qui est effectué en effectuant 30 000 fois sur le cuir enduit des flexions en utilisant un flexomètre décrit dans la norme JIS K 6545.

5. Cuir enduit d'un revêtement en résine contenant du fluor selon l'une quelconque des revendications 1 à 4, lequel a une épaisseur de film de revêtement en résine contenant du fluor de 2 g/m².

6. Cuir enduit d'une composition de revêtement en résine contenant du fluor selon l'une quelconque des revendications précédentes, dans lequel le groupe réactif réticulable est un groupe hydroxyle, un groupe amino, un groupe époxy, un groupe carboxyle, un groupe mercapto, un groupe silyle hydrolysable, une liaison amido, une liaison uréthane ou une liaison urée.

7. Cuir enduit d'une composition de revêtement en résine contenant du fluor selon la revendication 6, dans lequel le groupe réactif réticulable est un groupe hydroxyle.

8. Cuir enduit d'un revêtement en résine contenant du fluor selon la revendication 7, dans lequel l'indice hydroxyle de la résine contenant du fluor ayant un groupe hydroxyle n'est pas supérieur à 200 mg de KOH/g.

9. Cuir enduit d'un revêtement en résine contenant du fluor selon l'une quelconque des revendications précédentes, dans lequel la résine contenant du fluor est un polymère ayant une unité chlorotrifluoroéthylène, une unité tétrafluoroéthylène, une unité trifluoroéthylène, une unité hexafluoropropylène, une unité fluorure de vinylidène ou une unité fluorure de vinyle.

10. Cuir enduit d'un revêtement en résine contenant du fluor selon l'une quelconque des revendications précédentes, dans lequel l'agent réticulant est un composé isocyanate, une résine aminique, un anhydride d'acide, un composé polysilane, un composé polyépoxy ou un composé silane ayant un groupe isocyanate.

11. Cuir enduit d'un revêtement en résine contenant du fluor selon l'une quelconque des revendications précédentes, dans lequel le film de revêtement en résine contenant du fluor est formé directement sur le cuir.

12. Cuir enduit d'un revêtement en résine contenant du fluor selon l'une quelconque des revendications précédentes, dans lequel une couche de base est formée entre le cuir et le film de revêtement en résine contenant du fluor.

13. Cuir enduit d'un revêtement en résine contenant du fluor selon la revendication 12, dans lequel la couche de base est un film de revêtement ne contenant pas de fluor comprenant une résine acrylique, une résine méthacrylique, une résine uréthane, une résine acrylonitrile, une résine en butadiène, une résine en styrène, une résine en chlorure de vinyle, une résine en chlorure de vinylidène, une résine en acétate de vinyle ou un mélange de deux ou de plus de deux de celles-ci.

14. Procédé de production d'un cuir enduit d'un revêtement en résine contenant du fluor tel que défini dans l'une quelconque des revendications précédentes, comprenant les étapes consistant à
(i) appliquer une composition de revêtement en résine contenant du fluor réticulable sur une surface en cuir soit directement soit via une couche de base ; et
(ii) réticuler la composition de revêtement.

15. Procédé selon la revendication 14, dans lequel la composition de revêtement en résine contenant du fluor est enduite sur le cuir directement sans former une couche de base.

16. Procédé selon la revendication 14, dans lequel la composition de revêtement en résine contenant du fluor est enduite après avoir enduit la couche de base sur le cuir.

17. Procédé selon la revendication 16, dans lequel la couche de base est le film de revêtement ne contenant pas de fluor défini dans la revendication 13.

18. Utilisation d'un cuir enduit d'un revêtement en résine contenant du fluor tel que défini dans l'une quelconque des revendications 1-13, pour des articles d'intérieur d'un bâtiment, des articles d'intérieur d'un véhicule, du mobilier, des chaussures, des sacs, des vêtements et des petits articles en cuir.
